# EUROPEAN PATENT APPLICATION

(11) **EP 3 232 337 A1**
(43) Date of publication of application: **18.10.2017**
(21) Application number: 16185422.9
(22) Date of filing: 24.08.2016
(51) Int. Cl.: G06F 17/30

(54) **INFORMATION PROCESSING APPARATUS**

(30) Priority: 22.03.2016 JP 2016056737
(71) Applicant: Fuji Xerox Co., Ltd., Minato-ku, Tokyo (JP)
(72) Inventor: TODA, Tsuyoshi, Yokohama-shi, Kanagawa (JP); ISHIHARA, Ayaka, Yokohama-shi, Kanagawa (JP); NAKAMURA, Shinichi, Yokohama-shi, Kanagawa (JP); NOGUCHI, Nozomi, Yokohama-shi, Kanagawa (JP)
(74) Representative: Ward, James Norman

(57) **Abstract**

There is provided an information processing apparatus. A first display controller displays a list of data pieces on a display. A determination unit determines a display omitting item in an index in a case where the item sorting the data pieces displayed on the list is displayed as the index of the data, and determines an item in which N number of data items is greater than M number of data items (M and N are natural numbers which satisfy M<N) as the display omitting item. A second display controller displays the index on the display in a manner in which the item determined by the determination unit is omitted.

## Description

### TECHNICAL FIELD

The present invention relates to an information processing apparatus.

### RELATED ART

Patent Document 1 discloses a technology for displaying an index corresponding to data registered in a database among predetermined indexes.
Patent Document 1: JP-A-2013-088833

### SUMMARY

For example, in a case where item sorting data such as names or an address displayed in a list is displayed as an index, if increasing the number of items included in the index because there are a large number of data pieces and a large number of items, a size of a character indicating each item displayed on a display field which displays the index may have to be reduced. As a result, it is difficult to recognize each item and a user becomes unable to easily recognize which item is displayed.

An object of the present invention is to recognize the displayed item more easily compared to a case where any item is also displayed as an index, even when the number of items sorting the displayed data pieces is increased.

According to a first aspect of the invention, there is provided an information processing apparatus including: a first display controller that displays a list of data pieces on a display; a determination unit that determines a display omitting item in an index in a case where the item sorting the data pieces displayed on the list is displayed as the index of the data, and determines an item in which N number of data items is greater than M number of data items (M and N are natural numbers which satisfy M<N) as the display omitting item; and a second display controller that displays the index on the display in a manner in which the item determined by the determination unit is omitted.

According to a second aspect of the invention, there is provided the information processing apparatus according to the first aspect, wherein the determination unit determines the display omitting item in a case where the number of items of the data displayed in a list is equal to or greater than a threshold value.

According to a third aspect of the invention, there is provided the information processing apparatus according to the first or second aspect, wherein the determination unit determines an item which does not have data to be sorted in own item in the data displayed in a list as the display omitting item.

According to a fourth aspect of the invention, there is provided the information processing apparatus according to any one of the first to third aspects, wherein the items are classified into plural groups, and wherein the determination unit determines an item of the group, into which the item of data that is currently not being displayed is to be classified among the data displayed in a list, as the display omitting item.

According to a fifth aspect of the invention, there is provided the information processing apparatus according to any one of the first to fourth aspects, wherein in the items, an order is determined, and wherein the determination unit determines a lot of items as an order of the item is far from the item of the currently displayed data pieces among the data pieces displayed in a list as the display omitting item.

According to a sixth aspect of the invention, there is provided the information processing apparatus according to any one of the first to fourth aspects, wherein in the items, the order is determined, and wherein the determination unit determines a lot of items as the order of the item is close to the item of the currently displayed data pieces among the data pieces displayed in a list as the display omitting item.

According to a seventh aspect of the invention, there is provided the information processing apparatus according to any one of the first to fourth aspects, wherein the determination unit determines the display omitting item based on the number of data pieces which are displayed in a list to be sorted in each item.

According to an eighth aspect of the invention, there is provided the information processing apparatus according to any one of the first to seventh aspects, wherein the second display controller displays the item in a region having a size corresponding to the number of data pieces to be sorted in the own item among the data pieces displayed in a list.

According to a ninth aspect of the invention, there is provided the information processing apparatus according to any one of the first to eighth aspects, further including: a receiving unit that receives an operation of a user for selecting any item from the displayed index, and in a case where an operation of selecting a first item which does not have data pieces to be sorted in the own item among the data pieces displayed in a list is performed, receives the operation as an operation of selecting a second item which is closest to the first item among the second items which have data pieces to be sorted in the own item among the data pieces displayed in a list; and a processing unit that, in a case where the operation of selecting the second item is received from the receiving unit, performs a process according to the second item.

According to the first aspect of the invention, even when the number of the items sorting the data to be displayed becomes large, it is possible to easily recognize the displayed item, as compared to a case where any item is displayed as the index.

According to the second aspect of the invention, in a case where the number of the items of the data pieces displayed in a list is small, it is possible to display all of the items.

According to the third aspect of the invention, the user may recognize the item which has data pieces sorted in the own item in the data pieces displayed in a list.

According to the fourth aspect of the invention, compared to a case where the items are omitted regardless of the group, it is possible to easily recognize the item of the group in which the currently displayed items are classified.

According to the fifth aspect of the invention, it is possible to more easily recognize the item as the order of the item is close to the item of the currently displayed item.

According to the sixth aspect of the invention, it is possible to more easily recognize the item as the order of the item is far from the item of the currently displayed item.

According to the seventh aspect of the invention, it is possible to change the easily recognizable item according to the number of the sorted data pieces.

According to the eighth aspect of the invention, it is possible to easily recognize the number of the data pieces sorted in each item.

According to the ninth aspect of the invention, compared to a case where the operation of selecting the first item is received without any change, it is possible easily select the item which has the data pieces displayed in a list.

### BRIEF DESCRIPTION OF THE DRAWINGS

Exemplary embodiments of the present invention will be described in detailed based on the following figures, wherein:
Fig. 1 is a diagram showing a hardware configuration of a display device according to an example;
Fig. 2 is a diagram showing a functional configuration which is implemented by the display device;
Fig. 3 is a diagram illustrating an example of a list and an index of displayed data pieces;
Fig. 4 is a diagram illustrating an example of a state where an item is selected;
Fig. 5 is a diagram illustrating an example of an index displayed in accordance with a first rule;
Fig. 6 is a diagram illustrating an example of an index displayed in accordance with a third rule;
Fig. 7 is a diagram illustrating an example of an index displayed when a group of the selected item is switched;
Fig. 8 is a diagram illustrating an example of an index displayed in accordance with a fifth rule;
Fig. 9 is a diagram illustrating an example of an operating procedure of the display device in an index displaying process;
Fig. 10 is a diagram illustrating an example of an operating procedure of the display device in an item correspondence process;
Fig. 11 is a diagram illustrating the other example of the index displayed in a modification example;
Fig. 12 is a diagram illustrating an example of the index displayed in the modification example;
Fig. 13 is a diagram illustrating an example of the index displayed in the modification example;
Fig. 14 is a diagram illustrating an example of the index displayed in the modification example;
Fig. 15 is a diagram illustrating an example of the index displayed in the modification example; and
Fig. 16 is a diagram illustrating an example of a state where the item is selected.

### DETAILED DESCRIPTION

### [1] Example

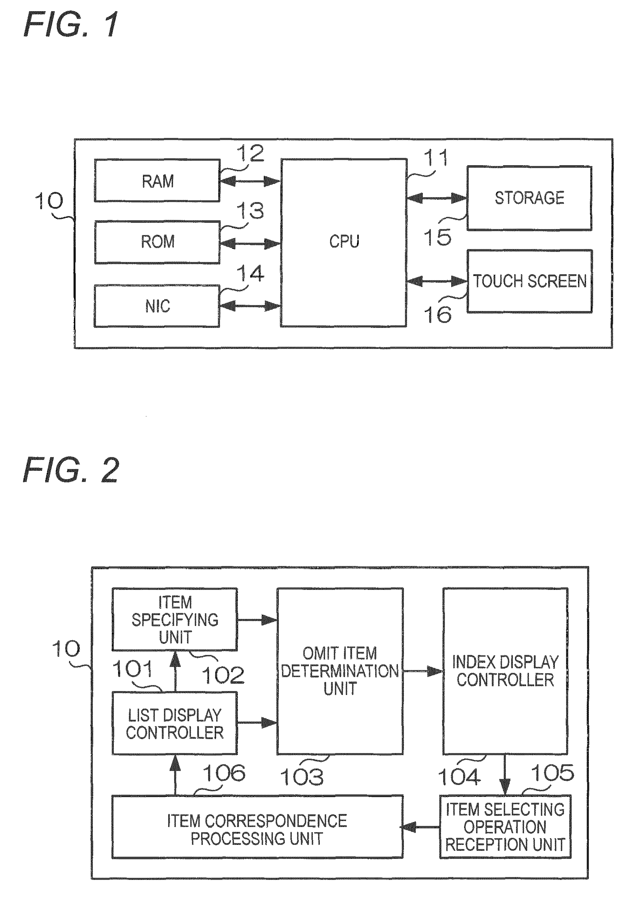

Fig. 1 shows a hardware configuration of a display device 10 according to an example. The display device 10 is provided with a display which is display means and is a device for displaying characters or images. For example, the display device 10 is a smart phone, a tablet terminal, or the like. The display device 10 is a computer including a central processing unit (CPU) 11, a random access memory (RAM) 12, a read only memory (ROM) 13, a network interface card (NIC) 14, a storage 15, and a touch screen 16.

The CPU 11 executes a program stored in the ROM 13 or the storage 15 using the RAM 12 as a work area to control an operation of each unit. The NIC 14 includes a communication circuit and performs communication with an external device. The storage 15 is a storage medium such as a flash memory and stores data or a program to be used by the CPU 11 to control. The touch screen 16 includes a display and a touch panel which is provided on a display surface. The touch screen 16 displays characters or images and receives an operation from a user.

The CPU 11 controls each unit by executing the program to implement functions to be described below.

Fig. 2 shows a functional configuration which is implemented by the display device 10. The display device 10 includes a list display controller 101, an item specifying unit 102, an omit item determination unit 103, an index display controller 104, an item selecting operation reception unit 105, and an item correspondence processing unit 106.

The list display controller 101 serves as a function for displaying a data list on a display (in the present example, a display of the touch screen 16), and is an example of a "first display control unit" of the invention. The list display controller 101, for example, displays a list of names, a list of phone numbers, a list of photo thumbnails which is stored in an own device, a list of titles of music in which music data is stored in the own device, or the like as a data list. In the present example, a case where the list display controller 101 displays a list of addresses as the data list will be described.

The list display controller 101 displays a list by a character having a size which is set as a recognizable size of the character. In a case where, if the number of data pieces is large, the list display controller 101 maynot display the list in one screen, the screen is scrolled to display all of the data pieces. The list display controller 101 supplies a data group (all of the data pieces) which is displayed as a list in such a manner to the item specifying unit 102 and the omit item determination unit 103.

The item specifying unit 102 specifies the item sorting the data displayed in a list by the list display controller 101. In the present example, the item specifying unit 102 specifies the data pieces displayed in a list, that is, the item in accordance with a sound at the beginning (speech sound) of an address as an item of the data pieces. If the beginning of the address is expressed by Japanese characters, the item specifying unit 102 specifies an A-column hiragana character in a row including the sound at the beginning as the item of the address.

For example, in a case of an address of "Adachi-ku ...", since the sound at the beginning a letter "A" corresponds to the A-column, the item specifying unit 102 specifies a letter "A" as the item as it is, and in a case of an address of "Chiyoda-ku ...", the item specifying unit 102 specifies a letter "Ta" that is the A-column hiragana character in the "Ta-row" including the letter "Chi" that is the sound at the beginning of the address as the item. In addition, in a case where the beginning of the address is a numeric character (for example, a zip code) or an alphabet, the item specifying unit 102 specifies the initial letter thereof as the item as it is. The item specifying unit 102 supplies the specified item to the omit item determination unit 103.

The index display controller 104 displays the item sorting the data displayed in a list by the list display controller 101 to a display as an index of the data. The index display controller 104 is an example of a second display controller of the invention.

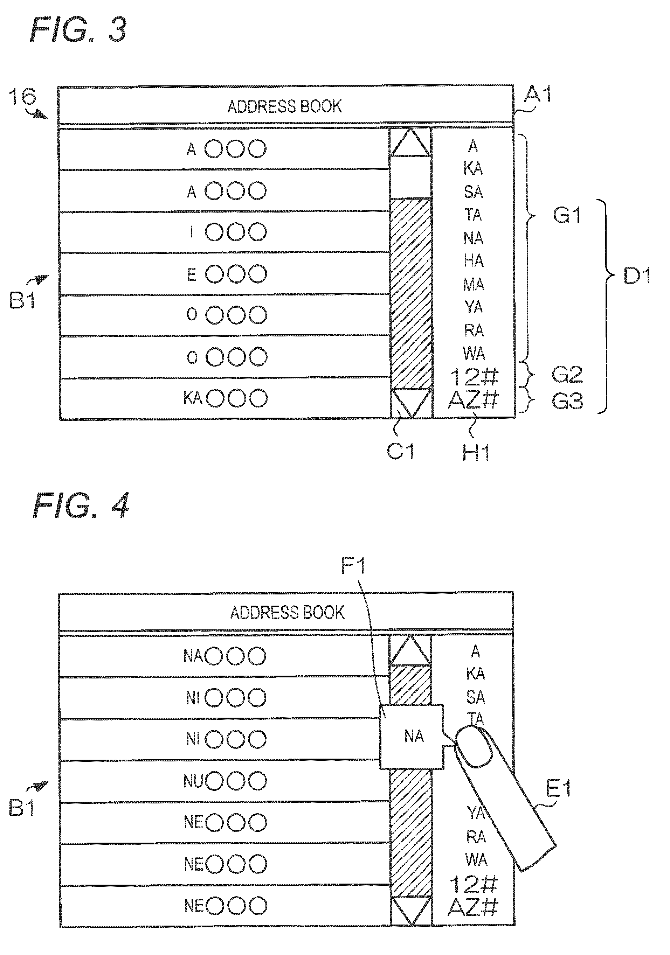

Fig. 3 illustrates an example of a list and an index of displayed data pieces. In Fig. 3, a screen A1 of an address book is displayed on the touch screen 16. An address list B1, a scroll bar C 1, and an index D1 are displayed on the screen A 1. The list display controller 101 displays the address list B1 and the scroll bar C1 and the index display controller 104 displays a display field H1 of the index D1.

In the example of Fig. 3, addresses that begin with letters "A", "I", "E", "O", and "Ka" included in the address list B1 are displayed. In the address list B1, undisplayed addresses are also included following the address that begins with the letter "Ka". A user operates the scroll bar C1 to scroll the address list B1, and thereby the undisplayed addresses are displayed by the list display controller 101. For easy understanding, only initial letters of the address is expressed by a hiragana character. However, the address may be expressed by kanji characters or numerical characters.

The index display controller 104 supplies displayed index information to the item selecting operation reception unit 105. The index information means information indicating the displayed items and a position where the items are displayed (for example, the position is expressed by a coordinate on the screen). The item selecting operation reception unit 105 receives an operation of the user for selecting any item from the index displayed by the index display controller 104. The item selecting operation reception unit 105 is an example of a "receiving unit" of the invention.

Fig. 4 illustrates an example of a state where an item is selected. In an example of Fig. 4, a state where a finger E1 of the user selects a letter "Na" item of the index D1 is illustrated. The item selecting operation reception unit 105 specifies the item which is selected by the user from the position which is instructed by the user and receives an operation for selecting the specified item. The item selecting operation reception unit 105 supplies the item selected by the received operation to the index display controller 104 and the item correspondence processing unit 106.

The item correspondence processing unit 106 performs processing in accordance with the item selected by the operation which is received by the item selecting operation reception unit 105. The item correspondence processing unit 106 is an example of a "processing unit" of the invention. In the present example, the item correspondence processing unit 106 performs a process for displaying data to be sorted the selected item in the list display controller 101 as a process in accordance with the selected item. By performing the process by the item correspondence processing unit 106, in the example of Fig. 4, the list display controller 101 displays the address that begins with a letter "Na" as the address list B1.

In addition, the item correspondence processing unit 106 performs a process for displaying an enlarged image which shows the selected item in an enlarged manner on the display as a process in accordance with the selected item. In the example of Fig. 4, the item correspondence processing unit 106 displays an enlarged image F1 which shows the letter "Na" that is the selected item in the enlarged manner. In a case of the touch screen, the item which is indicated by the user is hidden by the finger E1 of the user. But by displaying the enlarged image F1, the user recognizes the item selected by itself.

The item included in the index D1 shown in Fig. 3 is classified into plural groups of a group G1 of hiragana characters "AKaSaTaNaHaMaYaRaWa", a group G2 of numerical characters which is indicated by a character string "12#", and a group G3 of alphabets which is indicated by a character string "AZ#". The character strings "12#" and "AZ#" do not indicate letter "1 ", "2", "A", and "Z" items, respectively and are character strings indicating that the items of the groups G2 and G3 are omitted. In this manner, in the example of Fig. 3, the items included in the groups G2 and G3 are omitted. The omit item determination unit 103 determines which item the user should omit.

In a case where the item sorting the data pieces which are displayed in a list (hereinafter, referred to as a "list display data") by the list display controller 101 is displayed as an index of the list display data, the omit item determination unit 103 determines an item (hereinafter, referred to as an "omit item") in which the display is omitted in the index. The omit item determination unit 103 is an example of a "determination unit" of the invention.

When the omit item determination unit 103 supplies the determined item to the index display controller 104, the index display controller 104 displays the index in a manner in which the item determined by the omit item determination unit 103 is omitted. In the example of Fig. 3, the omit item determination unit 103 determines all of the items included in the groups G2 and G3 as omit items. The index display controller 104 displays all of the items other than the omit item without scrolling. The omit item is an example thereof, and the other items are determined as the omit item in some cases. The detailed determination method of the omit item will be described below.

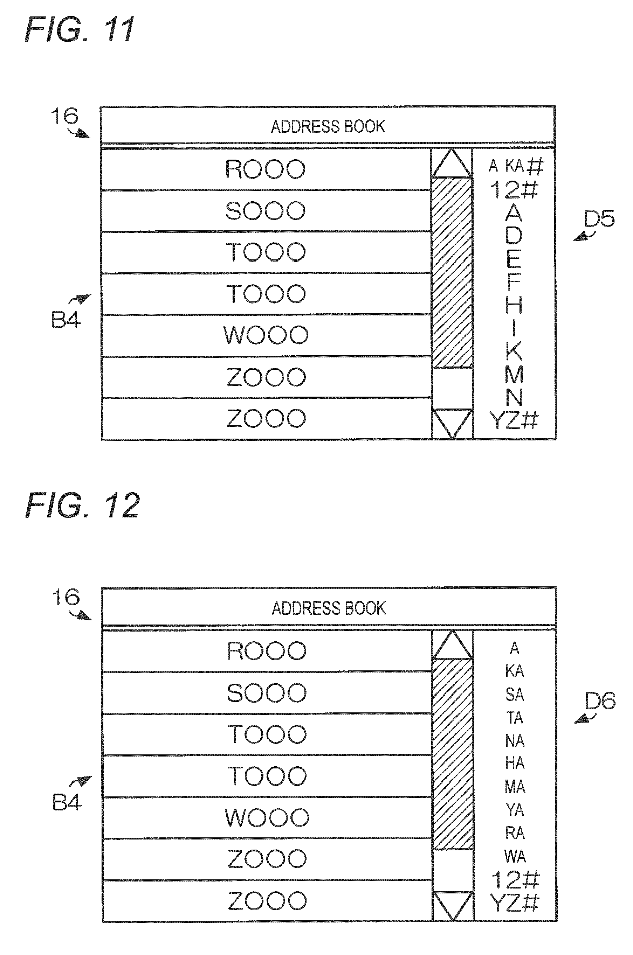

The omit item determination unit 103 determines the omit item in accordance with five rules in the present example. In a case where the number of items of the list display data is equal to or more than a threshold value Th1, the omit item determination unit 103 determines the omit item in accordance with a first rule. In other words, in a case where the number of items of the list display data is less than the threshold value Th1, the omit item determination unit 103 does not determine the omit item. As the threshold value Th1, for example, the number of lines (if the display field H1 of Fig. 3, 12 rows) in a case in which each item is displayed in the display field of the index with characters having a visually recognizable size in the display device 10 is used.

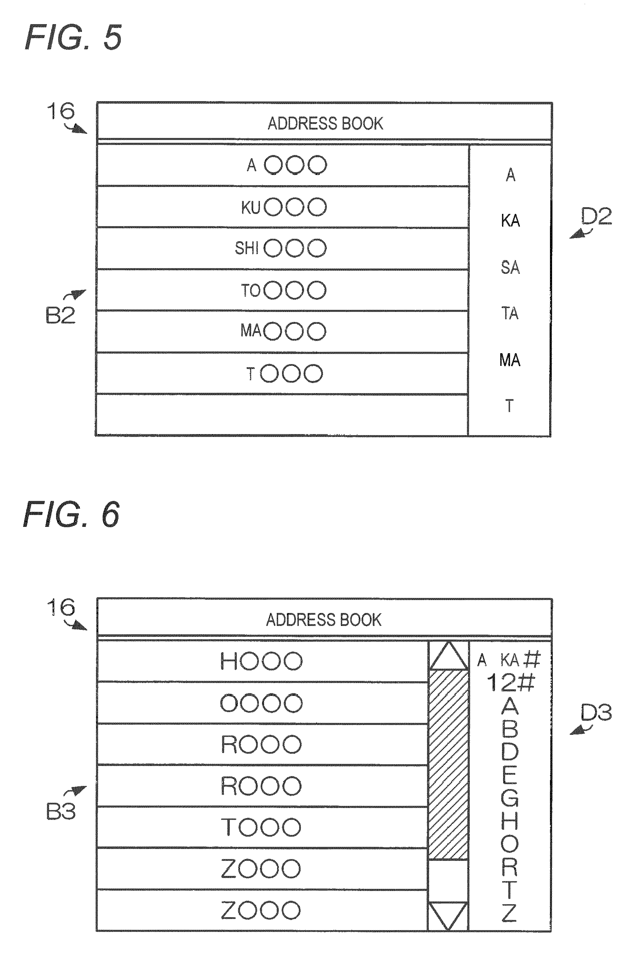

Fig. 5 illustrates an example of an index displayed in accordance with the first rule. In the example of Fig. 5, the address list B2 including addresses that begin with letters "A", "Ku", "Shi", "To", "Ma", and "T" is displayed on the touch screen 16. Since the value "6" that is the number of items of the list display data pieces shown in Fig. 5 is less than the threshold value Th1 "12", the omit item determination unit 103 does not determine the omit item. Therefore, the index display controller 104 displays the index D2 including all of the items ("A", "Ka", "Sa", "Ta", "Ma", and T) of the list display data pieces in a manner that the items are arranged to line up with a shared interval. According to this, in a case where the number of the items of the list display data is less than the threshold value Th1, that is, in a case where the number of the items of the list display data is small, all of the items become displayed.

In a case where the number of the items of the list display data is equal to or more than the threshold value Th1, the omit item determination unit 103 determines a lot of items as the omit item in accordance with a second rule as the number of the items of the list display data is large. For example, in a case where only address that begins with an alphabet is included in the list display data, if the number of items of the list display data is "13" that is a value exceeding the threshold value Th1 "12", the omit item determination unit 103 determines the item of "1" as the omit item, and if the number of the items of the list display data is "20", the omit item determination unit 103 determines the item of "8" as the omit item.

That is, in this example, the omit item determination unit 103 determines the item of the number of difference between the item number of the list display data and the threshold value Th1, as the omit item. According to this, as compared to a case where all of the items are displayed as an index, the number of the item to be displayed as the index becomes small and each item is displayed with a large size character. Thus, the user may easily recognize the displayed items. By using other rules to be described, there is a case where a lot of items than the number of the above-described difference is determined as the omit item. However, since there is no need to reduce the size of the character indicating the item, the number of the omit items may be increased.

With respect to which item is actually selected for omitting, the omit item determination unit 103 determines that, in accordance with third, fourth, and fifth rules. First, the omit item determination unit 103 determines the item without data to be sorted in its list in the list display data as the omit item in accordance with the third rule.

Fig. 6 illustrates an example of an index displayed in accordance with the third rule. In an example of Fig. 6, in an index D3 including letter "A", "B", "D", "E", "G", "H", "O", "R", "T", and "Z" items among the alphabet items of the group G3, and an address list B3 including addresses that begin with letters "H", "O", "R", "T", and "Z" are displayed on the touch screen 16.

In this example, the 103 determines the items of addresses that begin with letters "I", "J", and "K" which are not included in the address list B3 as the omit item. The index D3 in which the items are omitted in such that manner is displayed, thereby the user may recognize the item in which the data pieces sorted in own item is present in the list display data.

In addition, the omit item determination unit 103 determines the item of the group, in which the item of the data which is not displayed currently among the list display data pieces is classified, as the omit item in accordance with the fourth rule. For example, in the index D1 shown in Fig. 3, the item which is determined according to the third rule is omitted. Since the addresses which is are currently displayed in the address list B1 which is the list display data is the addresses which have sounds at the beginning "A" to "Ka", and the addresses that begin with the numeric character and the alphabet is not displayed, the omit item determination unit 103 determines the items of the group G2 and G3 in which the address items are classified.

In a case where the item of the group is omitted, in the present example, the omit item determination unit 103 determines the predetermined item among the items which are included in the group as the omit item. For example, in a case of the numerical characters group G2 of, the items "0" to "9" are determined, and in a case of the alphabet group G3, the items "A" to "Z" are determined. The items of the groups G2 and G3 are omitted in such a manner. Therefore, as compared to a case where the items are omitted regardless of the group, the user may easily recognize the item of the group G1, that is, the group in which the currently displayed items are classified.

When the user selects the item of the group G1 of the index D1 shown in Fig. 3 and swipes the selected position downward, the user may select the item of the group G2 next the last item "Wa" of the group G1.

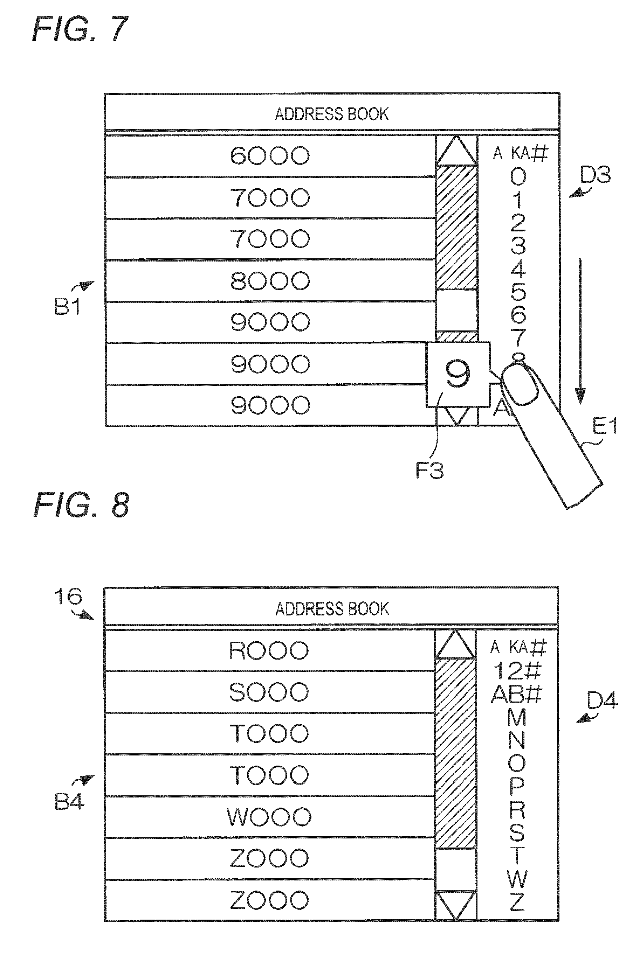

Fig. 7 illustrates an example of an index displayed when a group of the selected item is switched. In the example of Fig. 7, the items of the group G1 are omitted as "AKa#", and all of the items "0" to "9" of the group G2 are displayed.

In the example of Fig. 7, since the finger E1 of the user is moved to the position in which the character string indicating that the item of the group G2 of "12#" of Fig. 3 is omitted is displayed, a state that "9" closest to the character string "AZ#" indicating that the item of the group G3 is omitted among the items of the group G2 that all of the items are displayed is selected is shown. As a result, the list display controller 101 displays the addresses that begin with numerical characters "6" to "9" including "9" among the addresses included in the address list B1.

In this manner, when the group, in which the item selected by the operation received to the item selecting operation reception unit 105 is classified among the index which is displayed by the index display controller 104, is switched, and the group in which the omit item is classified is also switched, the omit item determination unit 103 determines the omit item. In a case of the example of Fig. 7, the group in which the omit item is classified is switched from the group G2 from the group G1, the omit item determination unit 103 determines the hiragana character items which are classified into the group G1 as the omit item.

In addition, in any of the items (hiragana, numerical character, and alphabet) sorting the list display data in the present example, an order of the items is determined. The omit item determination unit 103 determines a lot of items as an order of the item is far from the item of the currently displayed data pieces among the list display data pieces as the omit item, in accordance with the fifth rule.

Fig. 8 illustrates an example of an index displayed in accordance with the fifth rule. In the example of Fig. 8, addresses that begin with initial letters "R", "S", "T", "W", and "Z" included in an address list B4 and an index D4 including letter "M", "N", "O", "P", "R", "S", "T", "W", and "Z" items among the alphabet items of the group G3 are displayed on the touch screen 16. In addition thereto, in the address list B4, for example, the addresses that begin with alphabets "A" to "Q" are included.

In this example, the omit item determination unit 103 determines an item before than "M" among the alphabet items of the group G3 as the omit item. The omit item determination unit 103 determines the items (in this example, "Q", "U", "V", "X", and "Y") which does not have data pieces to be sorted in the own list in the list display data as the omit item, in accordance with the second rule.

In the example of Fig. 8, the index display controller 104 displays the character strings "AB#" indicating that the items of the beginning side of the alphabet are omitted instead of the items of the alphabets omitted in accordance with the fourth rule. The index D4 in which the items are omitted in such that manner is displayed, thereby the user may recognize as the item is close to the order from the item of the currently displayed list display data pieces.

By providing the above configuration, the display device 10 performs an index display process displaying the index in which the items are omitted and in a case where the item included in the index is selected, an item correspondence process corresponding to the selected item.

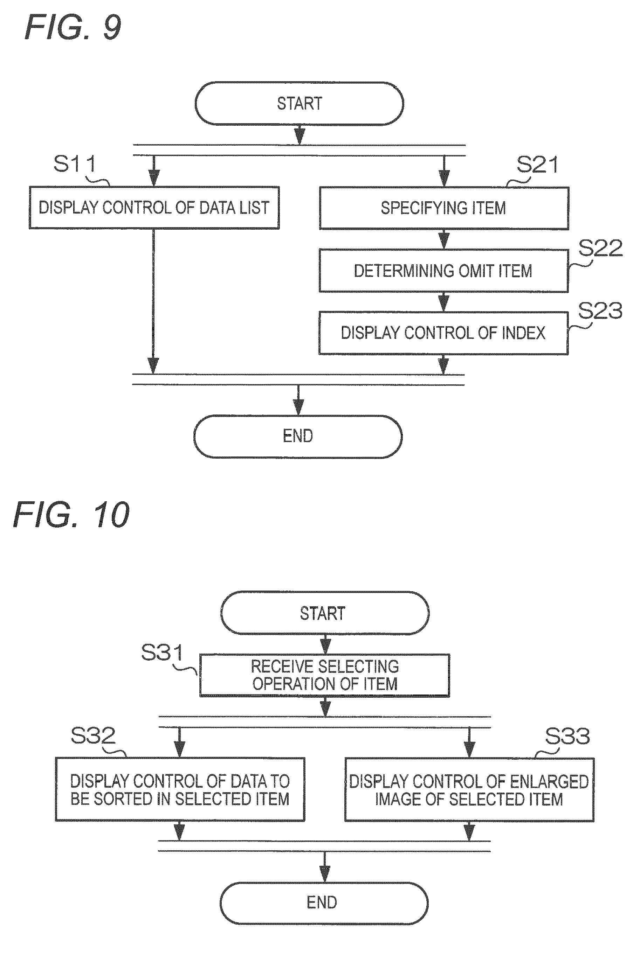

Fig. 9 illustrates an example of an operating procedure of the display device 10 in an index displaying process. The operation procedure is triggered by the operation in which the user displays the data list (for example, the address book shown in Fig. 3). First, the display device 10 (the list display controller 101) performs a control displaying the data list on the display (Step S11).

The display device 10 performs operations from Step S21 to Step S23, in parallel with an operation of Step S11. First, the display device 10 (the item specifying unit 102) specifies the item sorting the list display data which is displayed in a list by the list display controller 101 (Step S21). Next, in a case where the item sorting the list display data is displayed as the index of the list display data, the display device 10 (the omit item determination unit 103) determines the omit item in the index (Step S22). The display device 10 (the index display controller 104) performs a control to display the items sorting the data pieces which are displayed in a list by the list display controller 101 on the display as the index of the data in such a manner that the items determined in Step S22 are omitted (Step S23).

Fig. 10 illustrates an example of an operating procedure of the display device 10 in an item correspondence process. The operation procedure is triggered by the operation in which the user selects any item from the displayed index. First, the display device 10 (the item selecting operation reception unit 105) receives the operation for selecting the item (Step S31).

Next, the display device 10 (the item correspondence processing unit 106) performs a control to display the data to be sorted in the selected item on the display (Step S32). For example, in the example of Fig. 4, by the operation, the address which begins with a letter "Na" or "Ni" to be sorted in the selected a letter "Na" item is displayed. The display device 10 (the item correspondence processing unit 106) performs a control to display an enlarged image of the selected item in parallel with the operation of Step S32 (Step S33). For example, in the example of Fig. 4, an enlarged image F1 which is obtained by enlarging the selected a letter "Na" item is displayed.

### [2] Modification Examples

The above example are merely examples of the invention, and may be modified as described below. The above examples and the following modifications may be combined with each other as necessary.

### [2-1] Determination Method 1 of Omit Item

The omit item determination unit 103 does not need to follow all of the five rules described in the example. For example, the omit item determination unit 103 may determine the omit item in accordance with only first to fourth rules, and may determine the omit item in accordance with only second rules. The omit item determination unit 103 may determine the omit item in accordance with one or more rules among the four rules of the second to fifth rules. Since the omit item maynot be determined in accordance with only first rule, the first rule is excluded. However, the first rule may be used with other rules,

### [2-2] Determination Method 2 of Omit Item

In the example, by determining the item having the number exceeding the threshold value Th1 which is used in the first rule, the omit item determination unit 103 determines a lot of items as the omit item, as the number of items of the list display data is large (the second rule). It means that if the number of items of the list display data becomes large, the number of the omit item also becomes large certainly, but it is not limited thereto.

For example, the omit item determination unit 103 may additionally provide one item, every time the number of the items of the list display data increased by two. In this method, a case where only when the number of the items of the list display data increased by one, the number of the omit item does not changed occurs. However, as compared to a case where all of the items are displayed, the number of the items displayed as the index becomes small, and the user may be easily recognize the displayed item.

Furthermore, the omit item determination unit 103 may determine an item in which N number of data items is greater than M number of data items (M and N are natural numbers which satisfy M<N) as the display omitting item. By the omit item is determined in this way, as compared to a case of displaying any items as the index regardless of the item number of the list display data, even when the item number is increased from M to N, since the number of omit items becomes large, increasing of the item which is displayed as the index is suppressed. Accordingly, the displayed item may be easily recognized.

### [2-3] Consideration of Item Oder

In the example, the omit item determination unit 103 determines a lot of items as the order of the item is far from the item of the currently displayed data pieces among the list display data pieces as the omit item (the fifth rule), but it is not limited thereto. The omit item determination unit 103 may determine a lot of items as the order thereof is close to the item.

Fig. 11 illustrates an example of the index displayed in the present modification example. In the example of Fig. 11, addresses that begin with letters "R", "S", "T", "W", and "Z" included in the address book B4 shown in Fig. 8 and the index D5 including letter "A", "D", "E", "F", "H", "I", "K", "M", and "N" items among the alphabet items of the group G3 are displayed on the touch screen 16.

In the example, the omit item determination unit 103 determines the item later than "O" among the alphabet items of the group G3 in which the item of the currently displayed list display data pieces are classified as the omit item. The omit item determination unit 103 determines also items which do not have data to be sorted in the own list in the list display data (in this example, "B", "C", "G", "J", and "L") as the omit item in accordance with the second rule.

In the example of Fig. 11, the index display controller 104 displays a character string "YZ#" indicating that dorsocaudal items of the alphabet are omitted, instead of the omitted alphabet items. By displaying the index D5 in which the items are omitted in this way, the items are classified into the common group to the item of the currently displayed list display data pieces and the user may easily recognize the items as the order of the item is far from the item.

In the example of Fig. 11, it is considered only the order of the items common to the group. However, it may be considered an order of the items of the different groups. An order of the above-described groups G1, G2, and G3 is determined such that the G1 is a first order, the G2 is a second order, and the G3 is a third order.

Fig. 12 illustrates an example of the index displayed in the present modification example. In the example of Fig. 12, the address list B4 shown in Fig. 11 and an index D6 including hiragana character items letters "A" to "Wa" of the group G1 are displayed on the touch screen 16.

In this example, the omit item determination unit 103 determines the alphabet items of the group G3 that is item in which the order of the item is far from the item (alphabets "R", "S", "T", "W", and "Z") of the currently displayed list display data pieces and the numerical character items of the group G2 as the omit item. By displaying the index D6, the user may easily recognize the item as the order of the item is far from the item of the currently displayed list display data pieces (in this example, the item of the group G1).

### [2-4] Consideration of Data Number of each Item

To determine the omit item, the number of data pieces which are sorted in each item may be considered. In this case, the omit item determination unit 103 determines the omit item based on the number of the list display data to be sorted in each item. The omit item determination unit 103 determines the item in which the number of the list display data to be sorted in the own item is less than a threshold value Th21 as the omit item.

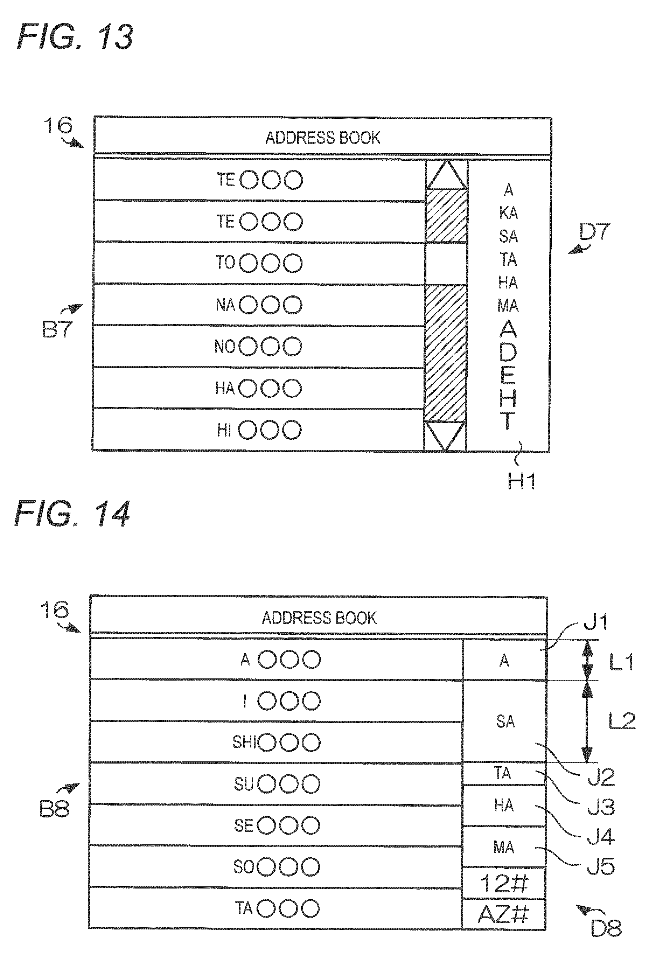

Fig. 13 illustrates an example of the index displayed in the modification example. In the example of Fig. 13, addresses that begin with letters "Te", "To", "Na", "No", "Ha", and "Hi" included in an address list B7 and an index D7 including items of letter "A", "Ka", "Sa", "Ta", "Ha", "Ma", "A", "D", "E", "H", and "T" items are displayed on the touch screen 16. Any of the items included in the index D7 is an item that the number of the list display data pieces to be sorted in the own item is equal to or more than a threshold value Th21, and any of the items which are not included in the index D7 is an item that the number of the list display data pieces to be sorted in the own item it less than the threshold value Th21.

For example, the addresses that begin with letters "Na" and "No" are also included in the address book B7. However, since the list display data pieces to be sorted in the letter "Na" are only the two addresses, if the threshold value Th21 is equal to or more than three, the omit item determination unit 103 determines the letter "Na" item is determined as the omit item. In the example of Fig. 13, the displayed item numbers are fall in the display field H1 of the index. However, in a case where when the items number becomes large, it is need to omit any one of items even when the number of the list display data pieces to be sorted in the own list is equal to or more than a threshold value Th21, the item may be omitted by considering the above-described order or considering the group.

In this manner, the index D7 in which the items are omitted is displayed. Therefore, the user may easily recognize the items as the number of list display data pieces to be sorted list display data pieces is large. The omit item determination unit 103 may determines the items in which the number of the list display data pieces to be sorted in the own list is equal to or more than a threshold value Th22, as the omit item in contradiction to the above-described example. In this case, the user may easily recognize the item as the number of the sorted list display data pieces is large. In any case, the item which is easily recognized by the user may be changed according to the number of the sorted list display data pieces.

### [2-5] Display Area of each Item

In the example, the index display controller 104 displays by arranging each of the items at the same interval each other, but it is not limited thereto. For example, the index display controller 104 may display the item to a region having a size corresponding to the number of data pieces to be sorted in the own list among the list display data pieces.

Fig. 14 illustrates an example of the index displayed in the modification example. In the example of Fig. 14, addresses that begin with letters "A", "I", "Shi", "Su", "Se", "So", and "Ta" included in the address list B8 and an index D8 including letter "A", "Sa", "Ta", "Ha", and "Ma" items are displayed on the touch screen 16. The index display controller 104 displays each items in a manner that a length L1 of a display region J1 of the letter "A" item in which two addresses are sorted is set to a length half of a length L2 of a display region J2 of the letter "Sa" item in which four addresses are sorted. The length here means a dimension of the character in a vertical direction.

According to the other items, the index display controller 104 displays regions which have sizes corresponding to the number of data pieces to be sorted in each item. For example, since the letter "Ta" item in which only one address is sorted, the region of the letter "Ta" is displayed by a display region J3 which have a length half of the length L1 of the display region J1 of the letter "A", and since all of the letters "Ha" and "Ma" items in which two addresses are sorted, display regions J4 and J5 of the letter "Ha" and "Ma" items which have a length L1 that is the same length of the display region J1 of the letter "A" item is displayed respectively. In this manner, each item is displayed, the user may easily recognize the number of list display data pieces sorted in each item, as compared to a case where each of the items is displayed with the same interval always.

### [2-6] Display without Consideration of Presence or Absence of Data

When the omit item is determined not in accordance with the third rules described in the example, the items (hereinafter referred to as a first item) which do not have data pieces to be sorted in the own list in the list display data are also displayed in some case. In a case where the operation of selecting the first item is performed, the item selecting operation reception unit 105 shown in Fig. 2 may receives the operation as an operation of selecting the second item closest to the first item which is selected from the items (hereinafter, referred to as a second item) in which data pieces to be sorted in the own list is in the list display data. In a case where the operation of selecting the second item is received in the item selecting operation reception unit 105, the item correspondence processing unit 106 performs a process in accordance with the second item.

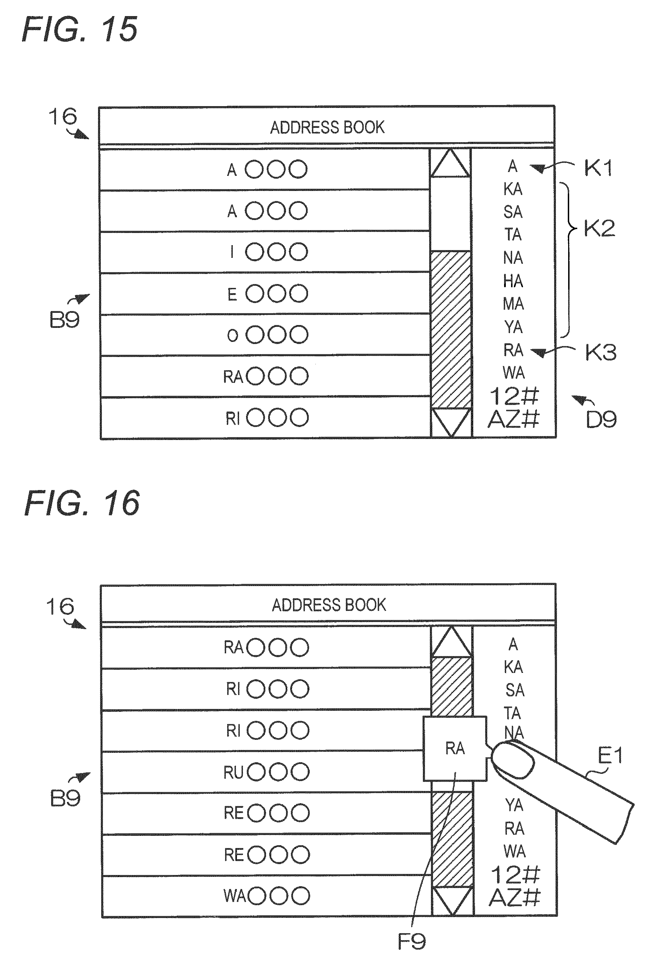

Fig. 15 illustrates an example of the index displayed in the modification example. In the example of Fig. 15, addresses that begin with letters "A", "I", "E", "O", "Ra", and "Ri" included in an address list B9 and an index D9 including items expressed by the hiragana characters in each of A-rows from the letters "A" to "Wa" are displayed on the touch screen 16. Among these characters, an item K1 indicating the letter "A" and an item K3 indicating the letter "Ra" are items in which the data pieces to be sorted in the own list are in the list display data, and all of items K2 from the letters "Ka" to "Ya" are items in which the data pieces to be sorted in the own list are not in the list display data.

Fig. 16 illustrates an example of a state where the item is selected. In the example of Fig. 16, a state where the finger E1 of the user performs an operation of selecting a letter "Ha" item of the index D9 is illustrated. Since the letter "Ha" item corresponds to the above-described first item (item which does not have data pieces to be sorted in the own list), the item selecting operation reception unit 105 receives an operation of selecting the letter "Ra" that is the second item closest to the letter "Ha" (the item in which the data pieces to be sorted in the own list is in the list display data).

For example, the item selecting operation reception unit 105 determines that the second item, in which the number of the other first items which are sandwiched by the selected first item and the second item is lost small, is the closest second item. In the example of Fig. 16, since four first items of the letters "Ka", "Sa", "Ta", and "Na" are sandwiched by the selected letter "Ha" and the second item letter "A", and two first items of the letters "Ma" and "Ya" are sandwiched by the selected letter "Ha" and the second item letter "Ra", the item selecting operation reception unit 105 determines that the letter "Ra" is the closest second item.

The method is not limited thereto, for example, the item selecting operation reception unit 105 calculates a coordinate of a centric point of the region to which the finger E1 is contacted among the touch screen 16, calculates the distance from the coordinate to the character of the second item, and may determine the second item in which the most short distance is calculated as the second item closest to the selected first item. In the example of Fig. 16, the item correspondence processing unit 106 performs a process for displaying an enlarged image F9 indicating the letter "Ra" that is the second item in which the selection is received, and a process to be instructed to the list display controller 101 so as to display the address to be sorted in the letter "Ra" item among the addresses included in the address list B9.

In the present modification example, in a case where an operation for selecting the first item which does not have data to be displayed in a list is performed, the data pieces of the second item are displayed in a list. That is, since the region for selecting the second item becomes expanded to an adjacent region in which the first item is displayed, it may easily select the second item that is data pieces displayed in a list, as compared to a case where the operation for selecting the first item is received as it is.

### [2-7] Item

The item in which the data pieces are sorted is not limited to the item described in the example (the item corresponding to the sound at the beginning (speech sound)). For example, the item may be a sound at the beginning as it is. In this case, the Japanese kana syllabary such as letters "A", "I", "U", "E", "O", "Ka", ···, and "Wa" may be used as an item. In addition, the item may be sorted by the attribution of the data such that addresses described by a municipality are sorted by the prefectures to which the addresses belong, for example. In short, the data may be sorted in accordance with some rules.

### [2-8] Group of Items

The group in which the items are classified is not limited to the group (hiragana characters, numerical characters, and alphabets) described in the example. For example, katakana characters or kanji, Arabic characters, or the like may be used. In addition, in a case where data pieces are sorted by the above-described prefectures, the group may be sorted by regions Hokkaido, Tohoku, Chubu, Kinki, Chugoku, Shikoku, Kyushu, and Okinawa. In short, the group may be classified based on some common points.

### [2-9] Omit Method

In the example, as the character indicating that the items are omitted, "12#" or "AZ#" is expressed. But it is not limited thereto, characters, for example, "···" may be expressed to indicate that the items are omitted. In any case, a character which is able to directly recognize that the items are omitted is preferably used. The omission may be expressed by figures instead of the characters.

### [2-10] Display

In the example, one device (the display device 10) includes a display controller (the list display controller 101 and the index display controller 104) and display means (the touch screen 16). Separate devices may include the display controller and the display means. For example, the display that is the display means is connected to the information processing apparatus including the display controller, and the display controller displays the list and the index by controlling the display. In addition, the display may not provided with a touch screen. In that case, scrolling the data list or selecting the item may be performed using a mouse or a keyboard.

### [2-11] Category of Invention

The present invention provides a display system including an information processing apparatus and a display, an information processing method for implementing a process to be executed by a display device or the information processing apparatus, and programs that cause a computer to execute the processes in addition to the information processing apparatus including the above-described display device or a display controller. The program may be provided in the form of a recording medium such as an optical disc in which the program is stored, or the like and may be provided in the form that the program is downloaded onto a computer via a communication line such as the Internet and is installed to so as to be available to the user.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. An information processing apparatus comprising:
a first display controller that displays a list of data pieces on a display;
a determination unit that determines a display omitting item in an index in a case where the item sorting the data pieces displayed on the list is displayed as the index of the data, and determines an item in which N number of data items is greater than M number of data items (M and N are natural numbers which satisfy M<N) as the display omitting item; and
a second display controller that displays the index on the display in a manner in which the item determined by the determination unit is omitted.

2. The information processing apparatus according to claim 1, wherein the determination unit determines the display omitting item in a case where the number of items of the data displayed in a list is equal to or greater than a threshold value.

3. The information processing apparatus according to claim 1 or 2, wherein the determination unit determines an item which does not have data to be sorted in own item in the data displayed in a list as the display omitting item.

4. The information processing apparatus according to any one of claims 1 to 3,
wherein the items are classified into a plurality of groups, and
wherein the determination unit determines an item of the group, into which the item of data that is currently not being displayed is to be classified among the data displayed in a list, as the display omitting item.

5. The information processing apparatus according to any one of claims 1 to 4,
wherein in the items, an order is determined, and
wherein the determination unit determines a lot of items as an order of the item is far from the item of the currently displayed data pieces among the data pieces displayed in a list as the display omitting item.

6. The information processing apparatus according to any one of claims 1 to 4,
wherein in the items, the order is determined, and
wherein the determination unit determines a lot of items as the order of the item is close to the item of the currently displayed data pieces among the data pieces displayed in a list as the display omitting item.

7. The information processing apparatus according to any one of claims 1 to 4, wherein the determination unit determines the display omitting item based on the number of data pieces which are displayed in a list to be sorted in each item.

8. The information processing apparatus according to any one of claims 1 to 7, wherein the second display controller displays the item in a region having a size corresponding to the number of data pieces to be sorted in the own item among the data pieces displayed in a list.

9. The information processing apparatus according to any one of claims 1 to 8, further comprising:
a receiving unit that receives an operation of a user for selecting any item from the displayed index, and in a case where an operation of selecting a first item which does not have data pieces to be sorted in the own item among the data pieces displayed in a list is performed, receives the operation as an operation of selecting a second item which is closest to the first item among the second items which have data pieces to be sorted in the own item among the data pieces displayed in a list; and
a processing unit that, in a case where the operation of selecting the second item is received from the receiving unit, performs a process according to the second item.
